# EUROPEAN PATENT SPECIFICATION

(11) **EP 0 638 009 B1**
(45) Date of publication and mention of the grant of the patent: **19.06.1996**
(21) Application number: 93912331.1
(22) Date of filing: 28.04.1993
(51) Int. Cl.: B23K 33/00, F16B 5/08

(54) **JOINT PROTECTION FOR MO-RE ALLOY LINED REACTION VESSELS**
VERBINDUNGSCHUTZ FÜR MIT MO-RE-LEGIERUNG BESCHICHTETE REAKTIONSGEFÄSSE
PROTECTION PAR JOINT POUR CUVES DE REACTION REVETUES D'UN ALLIAGE DE MOLYBDENE-RHENIUM

(30) Priority: 30.04.1992 US 876606
(43) Date of publication of application: 15.02.1995
(73) Proprietor: E.I. DU PONT DE NEMOURS AND COMPANY, Wilmington Delaware 19898 (US); NOOTER CORPORATION, St. Louis, MO 63104 (US)
(72) Inventor: FELIX, Vinci M., Kennett Square, PA 19348 (US); WELLS, David A., Newark, DE 19711 (US)
(74) Representative: Woodcraft, David Charles
(86) International application number: US9303744
(87) International publication number: WO9322096

(56) References cited:
- GB-A- 1 188 622
- US-A- 3 233 312
- US-A- 3 790 354

## Description

The present invention relates to fabricating alloy lined reaction vessels or processing equipment, and to protecting joints within such vessels.

### BACKGROUND OF THE INVENTION

One method frequently used in the chemical industry for solving severe corrosion problems is to explosively bond or clad a thin layer of a relatively expensive corrosion resistant metal or alloy upon a lower cost, base metal thereby obtaining a composite possessing corrosion resistance while minimizing use of relatively expensive metals. Fabricating equipment from such composites can be difficult, especially when the cladding or lining material has dissimilar metallurgical properties in comparison to the base metal. For example, should the coefficients of thermal expansion for the cladding and base metals be sufficiently dissimilar, the two layers of the composite will typically separate upon cyclic heating and cooling.

Another difficulty may occur at welded joints, which are located between adjacent sections of the composites, because of the high temperatures that are associated with welding certain metals. For example, when metals are heated above their recrystallization temperature, as may occur during welding, some grains will grow at the expense of others until a larger average grain size is attained which typically reduces the ductility of the metal. The resulting poor ductility at the joints may cause mechanical failure of the joint when exposed to the repeated thermal stresses which are caused by cyclically heating and cooling the composite.

A 59% by weight molybdenum-41% rhenium alloy (Mo41%Re) is commercially available, and has achieved important industrial applications because of its combination of high temperature strength, corrosion resistance, and workability. This molybdenum alloy has a coefficient of linear expansion with temperature which is about only half that of a base metal such as Hastelloy C-276 and carbon steel, whereas the alloy's modulus of elasticity is one and one half times as great. Because of the high stresses which will develop between the cladding and base layers during high temperature reactor or process vessel operation, conventional welded joints are expected to eventually separate and fail when exposed to cyclic heating and cooling. Furthermore, should a joint be exposed to a highly corrosive environment, even a minute crack which penetrates the Mo41%Re layer will rapidly corrode and cause failure of the entire equipment or vessel.

GB-A-1 188 622 discloses a process for the production of fusion welded joints, which comprises fusion welding together a cladded member comprising a base metal (other than molybdenum or a molybdenum base alloy), and a cladding consisting of molybdenum or a molybdenum alloy. This document does not disclose protecting the weld from corrosion comprising brasing with gold or gold alloys.

### SUMMARY OF THE INVENTION

The present invention relates to a process for providing a joint between composites which are assembled to fabricate chemical processing equipment. The inner surface of the composite comprises a layer of corrosion resistant material such as Mo41%Re which is explosively bonded or clad to a relatively inexpensive base metal. After one or more composites are formed into a desired shape, the composites are machined to remove a portion of the Mo41%Re layer which is adjacent to a joint that will be formed between the composites. The ends of the base metal layers, which were exposed upon removal of the Mo41%Re layer, are welded to form a joint. The joints in the assembled or joined composites are protected by one or more of the three following methods.
1. A strip of metal comprising Mo41%Re is placed into and generally fills the area defined by the removed alloy. Normally, after appropriately locating the strip, the edges of the strip are brazed with 24 carat gold.
2. Overlaying the exposed weld with 24 carat gold metal thereby filling the joint and protecting the weld. Typically, the gold overlay extends onto the Mo41%Re layer of the joined composites.
3. Locating a strip of filler metal into the area defined by the removed alloy, and then placing a strip of corrosion resistant material such as Mo41%Re, over the filler metal within the joint. The strip of Mo41%Re is typically electron beam welded to the Mo41%Re layer of the joined composites, and if necessary, brazed with 24 carat gold.

### BRIEF DESCRIPTION OF THE DRAWINGS

FIGURE 1-Fig. 1 is a cross-sectional schematic drawing of a joint between two composites.

FIGURE 2-Fig. 2 is a cross-sectional schematic drawing of another joint which can be formed between two composites.

FIGURE 3-Fig. 3 is a cross-sectional schematic drawing of a further embodiment of a joint which can be formed between two composites.

FIGURE 4-Fig. 4 is a schematic of an assembly which may be used for producing composites.

### DETAILED DESCRIPTION OF THE INVENTION

The present invention relates to providing a durable joint between composites which include a corrosion resistant material that have been assembled by welding in order to fabricate chemical manufacturing equipment. The characteristics of the joint serve to compensate for stresses caused by any differences in the physical properties, e.g., coefficient of thermal expansion, among the individual components of a composite and/or neighboring composites which have been assembled together. In particular, the joint of the invention is capable of withstanding the cyclic thermal and mechanical stresses associated with operation of a pressure vessel for manufacturing hydrochlorofluorocarbon (HCFC) and hydrofluorocarbon (HFC) compounds. For example, the joint of the invention absorbs, compensates, or relieves stresses which typically develop within a joint between two composites which comprise a Mo41%Re layer that is explosively bonded to a base layer. In the case wherein the base layer of the composite comprises carbon steel, the thermal expansion coefficient for steel is about 10.8 x 10⁻⁶mm/mm (6 x 10⁻⁶ in/in/° F), whereas the same coefficient for Mo41%Re is about 5.4 x 10⁻⁶ mm/mm (3 x 10⁻⁶ in/in/° F). Further, the modulus of elasticity for carbon steel is about 207 x 10⁹ P2 (30 x 10⁶ psi), whereas the same modulus for Mo41%Re is about 310 x 10⁹ P2 (45 x 10⁶ psi). The stresses, which can be caused by the differences in thermal expansion coefficient and modulus of elasticity, that occur within a cyclically heated and pressured vessel can reach about 593 x 10⁶ P2 (86,000 psi) tension in the Mo41%Re layer, and about 138 x 10⁶ P2 (20,000 psi) tension in the base layer. Accordingly, it was a surprising and an unexpected result that the welded joint of the invention can withstand the thermal and mechanical stresses caused by cycling between temperature extremes for a number of cycles.

The equipment is typically used for manufacturing replacement fluorocarbons, known as HCFCs, and HFCs, that have a lower ozone depleting potential than conventional chlorofluorocarbons (CFC) compounds. Suitable techniques for manufacturing the replacement HCFC and HFC compounds are disclosed in U.S. Patent Nos. 4,258,225 and 4,967,024, which are hereby incorporated by reference. Such manufacturing techniques typically require reacting halogenated alkenes or alkanes with hydrogen fluoride in the presence of at least one catalyst from the group of TaF₅, NbF₅, SbF₅, MoF₅, AsF₅, among others.

The corrosion resistant equipment which is produced in accordance with the invention reduces, if not eliminates, the quantity of corrosion by-products or contaminates which are released into a fluorination process that produces HCFC or HFC compounds, e.g., conventional equipment is degraded thereby releasing undesirable by-products into the alkane manufacturing process. These contaminants can reduce reaction rates, become involved in unintended reactions, inhibit catalytic activity, e.g., deactivation or poisoning of the catalyst, and taint the finished product. As a result, the invention solves the problems associated with conventional equipment and advantageously permits manufacturing high-quality fluorinated alkanes in a manner which minimizes equipment replacement and contamination of the fluorination process.

The surface of the equipment which is exposed to the fluorination process discussed above corresponds to the corrosion resistant surface, i.e., a molybdenum-rhenium alloy, of the composites. A suitable molybdenum-rhenium alloy possesses a corrosion rate of less than about 25.4 x 10⁻³ mm/yr (1 mil per year) when exposed to the fluorination process.

Whenever used in the specification and appended claims the terms below are intended to have the following definitions.

"Metal" is intended to refer to both pure metals and metal alloys.

"Composite" is intended to refer to a plurality of layers of the same or chemically different metals which have been metallurgically bonded, i.e., substantially without diffusion, together by explosively bonding or cladding to form an integral structure. The integral structure comprises at least two layers, namely, a corrosion resistant layer and a base layer. The characteristics of a composite can be tailored to meet a particular application by appropriately selecting the metal layers which are explosively bonded together.

In some cases an intermediate layer is located between the corrosion resistant metal and base metal layers. A suitable intermediate layer may comprise at least one member from the group of copper, silver, tantalum, Hastelloy alloys, among others. The thickness of the intermediate layer typically ranges from about .3 mm (0.010 inch) to about 3.8 mm (0.150 inch). For example, one or more copper intermediate layers may be used for dissipating and distributing heat when the composites are joined together, e.g., welding, brazing, among others. Further, one or more Hastelloy intermediate layers, which comprise a nickel base alloy such as Hastelloy C-276, may function as a secondary corrosion resistant layer.

"Corrosion resistant" is intended to refer generally to chemical resistance, but may also include abrasion/erosion resistance.

"Base metal" is intended to refer to metals on which the molybdenum rhenium alloy is explosively clad in order to form a composite. Examples of suitable base metals comprise at least one of carbon steel, stainless steel, aluminum, among others. The base metal functions to enhance the structural integrity of the composite. In the case of one-sided composites, normally the base metal is the backer or base layer onto which the molybdenum alloy is clad. For two-sided composites, opposing faces of the base or backer layer are clad with the same or chemically different metals. Typically, the base metal has a thickness which ranges from about 9.53 mm (0.375 inch) up to the thickness required to withstand the pressure induced stresses within a vessel.

"Reaction vessel", "vessel", "reactor", or "manufacturing equipment" is intended to refer to any article of manufacture which is fabricated from one or more composites. Composites may be used for fabricating equipment such as autoclaves, pressure vessels, reactors, dissolvers, heat exchangers crystallizers, piping heads, tubes, sheets, structural or electrical connectors, among others. The design or configuration of the reactor, vessel, among many others, does not form a critical aspect of the invention, and may be one which is conventional or well known in this art.

"Joint" is intended to refer to the characteristics of the area defined between two or more edges of one or more composites which have been joined together.

"Explosion or explosively bonding" is intended to refer to a process for fabricating a composite. An explosive is detonated which propels at least one of the layers to be bonded towards the other layer. Any suitable explosion bonding technique may be used in accordance with the invention to form a composite. Examples of suitable explosion bonding techniques are discussed in Example 1 below, and U.S. Patent Nos. 3,397,444, 3,493,353, 3,554,126, 3,205,574, 3,233,312, and 3,264,731, which are hereby incorporated by reference.

"Molybdenum alloy", "molybdenum41%rhenium", "moly-rhenium alloy", s intended to refer to a corrosion resistant material which is explosively bonded to a backer or base metal. The molybdenum alloy will become the corrosion resistant interior surface of the composite thereby protecting the remainder of the composite form a corrosive environment, e.g., the environment associated with manufacturing HCFC and/or HFC compounds. A suitable molybdenum alloy typically has a corrosion rate which is less than about 1 mil per year. The molybdenum alloy typically ranges from about 0.79 mm (1/32 in) to about 3.18 mm (1/8 inch) thick.

"Brazing" and "Welding" are intended to refer to conventional processes for joining, sealing, or adhering together one or more composites. Generally brazing comprises a process for joining two or more metal containing composites in which a molten material is introduced and drawn by capillary attraction into a space between the composites that are to be joined, whereas welding typically relies upon localized heating of the composites which fuses at least a portion of the composites together. Examples of suitable welding processes include one or more of automatic submerged arc welding, gas tungsten arc welding, gas metal arc welding, shielded metal arc welding, among others. In some cases, brazing and/or welding are employed upon a single composite which has been formed into a particular shape. For example, a composite may be rolled or bent such that two edges of the same composite can be joined together, thereby creating a continuous surface, e.g., a pipe.

A generally planar composite, which comprises at least a corrosion resistant layer and a base layer, is obtained by explosion bonding these layers together, e.g., refer to Example 1. In some cases, at least one intermediate layer may be located between the corrosion resistant and base layers. The dimensions of the resultant composite may be modified by any suitable process such as cutting, trimming, grinding, among others, so that the modified composite is suitable for being shaped and assembled into a reaction vessel. The three dimensional characteristics of the modified composite may be shaped into a virtually unlimited array of configurations by using any suitable conventional shaping process such as rolling, shaping, drawing, among others. For example, a composite which has been modified, e.g., trimmed, to a particular dimension may be rolled into an elliptical shape that, when assembled, will become the head or end portion of a pressure vessel.

Abutting edges of appropriately sized and shaped composites, which are to be joined, are machined by employing any suitable machining techniques. By machining the base metal edges and an optional intermediate layer edges substantially flush and parallel with each other, the quality, e.g., structural integrity, of the joint can be improved. Abutting edges of a composite may be either two individual composites or, in the case of a cylinder, opposite ends of the same composite. In some cases, it may be desirable to bevel, round or machine a groove into the surface of the base metal, and/or the optional intermediate metal layer, which is perpendicular to the abutting edge. This later machining step may be employed for enhancing penetration of the brazing or welding metal, e.g., a beveled surface adjacent to and generally perpendicular with the abutting edge encourages a brazing metal to flow into the joint.

A quantity of the corrosion resistant layer, e.g., Mo41%Re alloy, which is adjacent to the area that will become the joint, is removed thereby exposing the abutting edges of the composites. A sufficient quantity of the molybdenum alloy is removed from the composites in order to avoid adversely affecting the remaining molybdenum alloy when the base metal layers are welded together. Should a molybdenum alloy be heated to a temperature in excess of its recrystallization temperature, i.e., which is less than its melting point, the mechanical properties of the alloy can be reduced. In other words, directly exposing the molybdenum alloy to the temperatures which are used for welding the base metal layers together would likely result in alloy recrystallization that reduces the mechanical properties of the alloy thereby rendering the alloy less effective for use in a reactor vessel.

After removing a sufficient quantity of the molybdenum alloy, the abutting metal edges, which includes the edges of an optional intermediate layer, are welded together by using any suitable welding technique. Suitable welding techniques will vary with the base metal and intermediate layer compositions. The composites which have been assembled into an integral structure may be attached or welded other composite assemblies and/or other structural members, e.g., a threaded pipe, reactor support structures, among others, in order to obtain the desired reactor vessel. For example, two or more composites may be welded together to form an end or a head of a pressure vessel. The end of the pressure vessel can in turn be welded to a cylindrical member which comprises one or more cylindrical shaped composites. Before operating the vessel, the structural integrity of a composite, an assembly, or the finished vessel should be confirmed by dye penetration tests, radiographic inspection, among others. Should the finished product be employed a a pressure vessel for manufacturing HFC or HCFC compounds, the vessel typically must be capable of withstanding a pressure of about 4.14 x 10⁶ P2 (600 psig) at 204.44°C (400°F) as determined by the requirements of the American Society of Mechanical Engineers (ASME) Boiler & Pressure Vessel Code.

The weld, which is formed between composites during assembly, is protected from the environment that will be present when operating the reactor vessel. For example, the environment within the vessel, which is associated with manufacturing a HFC or HCFC compound, is corrosive and would degrade an unprotected weld. In accordance with the invention, the welded joint, associated seams, among others, are protected by being covered, e.g., brazed, with a corrosion resistant material such as molybdenum alloys, gold, certain gold alloys, among others. While 24 Carat gold is a desirable brazing material, any material may be used which avoids metal embrittlement of the composite, and has a melting point that is less than the recrystallization temperature of the molybdenum alloy.

In one aspect of the invention, a method for protecting the welded joint comprises fitting a strip of Mo41%Re alloy into the gap, which was formed by removing a portion of the molybdenum alloy prior to welding, and brazing the edges of the strip with 24 carat gold. For example, a Mo41%Re alloy strip, which has substantially the same thickness as the removed Mo41%Re layer of the composite, is fit into the gap that is located above the area defined by the weld. The edges of the strip, which are adjacent to the molybdenum layer of the joined composites, can be welded thereby sealing and fixing the location of the strip. While any suitable strip sealing process which avoids adversely affecting the molybdenum strip and/or layer may be used to practice this aspect of the invention, it is desirable to employ gas tungsten arc welding (GTAW). For example, a suitable GTAW process uses an inert gas such as argon and about 5% hydrogen for shielding the joint while depositing a 24 K gold along the edges of the strip. The hydrogen component of the shielding gas cleans the joints by chemically reducing oxides which may be formed on the Mo41%Re alloy. It is desirable to remove these oxides as they tend to inhibit adhesion of the brazing metal, e.g., gold, to the Mo41%Re.

In another aspect of the invention, the joint is protected by overlaying the exposed portion of the weld with 24 carat gold, and extending the overlay onto the Mo41%Re layer of the composite. The exposed portions of the base metal and/or an intermediate layer such as Hastelloy C-276, are overlaid by brazing which typically employs the gas tungsten arc welding process discussed above. Normally, the overlay fills the area above weld, and overlaps upon a portion of the Mo41%Re layer which is adjacent to the joint. In comparison to the joint protection method discussed above, this method would be desirable when the joint is subjected to thermal cycling.

In yet another aspect of the invention, the weld within the joint can be protected by placing a filler strip into the gap of the joint, which was formed prior to welding by removing a portion of the molybdenum alloy layer, and then placing a corrosion resistant strip, e.g., Mo41%Re, gold, among others, over the filler strip within the joint. Suitable filler strip materials comprise at least one member from the group of nickel alloys such as Hastelloy B-2, Hastelloy C-276, among others. The corrosion resistant strip is approximately one-half inch wider than the filler strip which is normally about 19.05 mm (0.75 inch) wide. The thickness of the filler strip is substantially the same as the Mo41%Re cladding layer, whereas the corrosion resistant strip is at least as thick as the Mo41%Re layer of the composite, e.g., typically 1.59 mm (1/16 inch) thick. The corrosion resistant strip is typically affixed to the joint and composite by electron beam welding. Exposed portions of the strips can be protected by being braze welded with 24 carat gold.

In some cases, an intermediate layer of heat conducting alloy, e.g., a 4.76 mm (3/16 inch) thick sheet of substantially pure copper, is explosively bonded between the Mo41%Re alloy layer and the base metal of the composite for removing heat which is generated when welding the composites together. Prior to welding such a composite, an appropriate portion of the molybdenum layer is removed from the composites in the manner discussed above. The joint forming process is begun by welding the base metals layers together from the side of the composites which opposes the molybdenum alloy surface of the composites, i.e., welding is performed from the external surface of the vessel. Next, the intermediate layers are welded together from the side of the composites which corresponds to the molybdenum alloy surface, i.e., the location of the weld for the intermediate layers is performed from an opposing surface of the composites with respect to the base metal weld. The joint formed by welding is typically protected by placing filler and molybdenum alloy strips within the joint, i.e., over the weld, and adjacent to the molybdenum alloy layer of the assembled composites. Any exposed seams or joints between the edges of these strips and at "T" intersections of welds are protected by gas tungsten arc welding (GTAW) braze welding with 24 carat gold under an inert shielding gas.

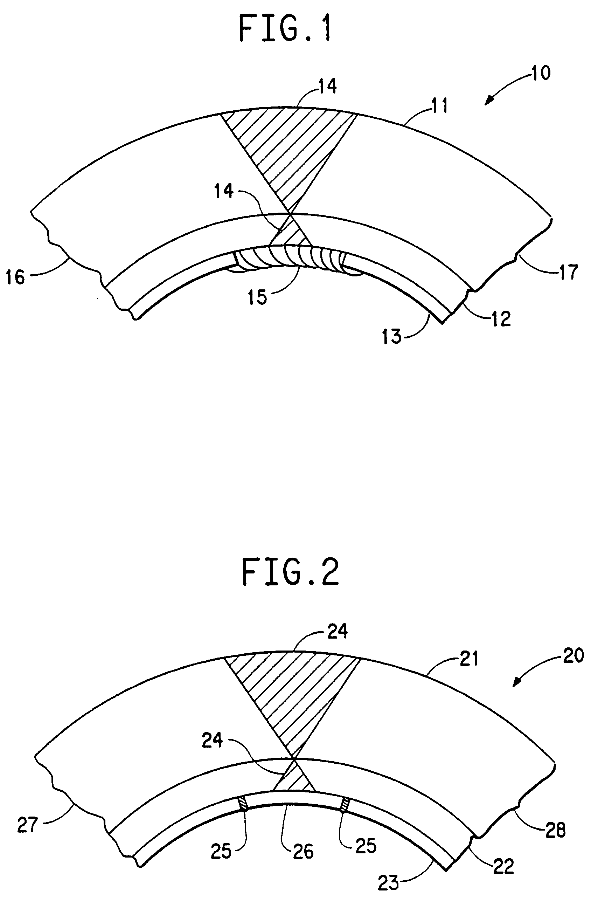

Certain aspects of the invention are illustrated by Figures 1-4. Referring now to the Figures 1-3, Figs. 1-3 illustrate a schematic of a cross-section of a wall in a reactor for producing fluorinated alkanes. Fig. 1 illustrates one embodiment of the wall 10 of a reactor which comprises an explosively bonded composite that includes carbon steel layer 11, Hastelloy C-276 intermediate layer 12, and a layer of a molybdenum-rhenium alloy 13, e.g., a molybdenum-41 wt. % rhenium alloy. When the reactor is employed for manufacturing an alkane, layer 13 is in direct contact with the fluorination process. The wall 10 is formed by welding together at least two suitable clad hemi-spherical or elliptical head composites. As illustrated in Fig. 1, clad composite 16 is welded to physically similar clad composite 17. The weld is shown in Fig. 1 by the regions labelled as 14. The weld between layers 11 and 12 of the composites necessitated removing a portion of layer 13 from each of the composites, i.e., this portion was removed to gain access to the underlying areas to be welded, and prevent harm, e.g., recrystallization, of the molybdenum-rhenium. The area defined by the removed portion was back-filled by brazing to form an overlay 15. Overlay 15 protects the joint formed by weld 14 and comprises any suitable brazing material. When layer 13 comprises a molybdenum-rhenium alloy, 24 K gold, e.g., a gold wire, is normally used as a brazing material.

Figure 2 illustrates an alternative to the embodiment shown in Fig. 1. Referring now to Fig. 2, the wall 20 comprises a composite formed by explosively cladding carbon steel layer 21, Hastelloy C-276 intermediate layer 22, and a layer of a molybdenum-rhenium alloy 23. The wall 20 is formed by welding together at least two clad hemi-spherical or elliptical head composites. Clad composite 27 is welded to composite 28. The weld is shown in Fig. 2 by the regions labelled as 24. The weld between layers 22 and 21 necessitated removing a portion of layer 23 from each of the composites. The area defined by the removed portion was back-filled by brazing a strip 26 of corrosion resistant material into the area which is labelled as 25. The strip 26 was brazed into place using 24 K gold.

The thickness of the carbon steel base layers typically ranges from about 19.05 mm (0.75 inch) to about 38.10 mm (1.50 inch) thick. The intermediate layers shown in Figs. 1 and 2, normally range from about 1.59 mm (1/16 inch) to about 6.35 mm (0.25 inch) thick. The molybdenum-rhenium alloy is usually from about 0.79 mm (1/32 inch) to about 3.18 mm (1/8 inch) thick. The portion of the molybdenum-alloy which is removed, prior to welding, is typically about 19.05 mm (0.75 inch) in width.

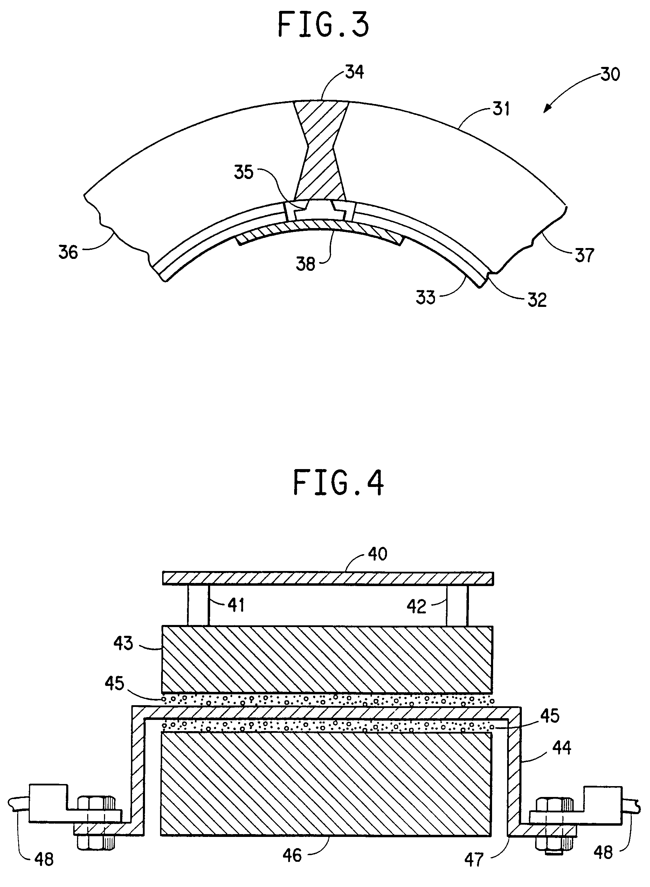

Figure 3 illustrates a further aspect of the invention. Referring now to Figure 3, the wall 30 comprises a composite which was formed by explosively cladding carbon steel layer 31, Hastelloy C-276 or B2 intermediate layer 32, and a layer of a molybdenum-rhenium alloy 33. The wall 30 is formed by welding together at least two clad hemi-spherical or elliptical head composites. Clad composite 36 is welded to composite 37. The weld is shown in Fig. 3 by the region labeled as 34. In some cases, the region between the intermediate layers is also welded together. The weld between composites 36 and 37 necessitated removing a portion of layer 33 from each of the composites being joined. Normally, a portion of layer 32, which is beneath layer 33, is also removed. A filler strip 35 was located into the area defined by the removed portion of layer 33, and above weld 34. Optionally, the filler strip 35 is brazed or welded. A corrosion resistant strip 38, which is wider than the underlying joint, is placed upon filler strip 35 and in contact with layer 33. The edges of strip 36 are sealed by being welded, e.g., electron beam welded, and/or brazed, e.g., with 24 carat gold.

Referring now to Figure 4, Fig. 4 is a side view of an assembly which can be used for obtaining a composite by explosion bonding. Fig. 4 shows an assembly wherein a heating element which will not become a component of the formed composite is heated by passing an electrical current through the heating element, thereby indirectly heating the backer and cladding layers. The cladding layer 40 is supported by standoffs 41 and 42 above the backer layer 43. Backer plate 43 is supported by a stainless steel plate upon an optional heating element 44. In some cases, heating element 44 may not be required or replaced by an indirect heating means. Backer plate 43 is insulated from heating element 44 by a layer of silica sand 45. A support plate 46 is located beneath heating element 44, and insulated from the heating element by a layer of silica sand 45. Thin layers of sand may also be used for providing electrical insulation among the heating element, and support and backer plates. The sand also prevents the stainless steel heating plate 44 from becoming bonded to either the support or backer plates. The support plate 46, beneath the stainless steel heating plate, is used only when necessary for reducing bending or warping in the final composite. For example, should the weight supported by the backer layer be sufficient to cause downward bowing or warping of the backer layer, the resultant composite will also be bowed or warped. The portion of the stainless steel heating element 44 which is adjacent to the backer layer is longer and wider than the cladding layer or backer layers. The heating element also included an offset 47 which limits the damage to wires 48 caused by the detonation of the explosive.

While particular attention has been given to manufacturing a composite which becomes assembled into a reactor vessel, the joint of the invention may be employed for assembling a composite to another metal article which is chemically and/or physically distinct from the composite. For example, a composite of the invention may be joined to one or more articles such as a metal cylinder, rod, sheet, tube, among many others, thereby tailoring at least a portion of the assembled product. In some cases, a composite may be employed for increasing the corrosion resistance of a limited area of, for example, a cylinder which corrodes rapidly, e.g., a portion of the lower region of a stainless steel cylinder can be replaced with a composite thereby improving the corrosion resistance of the cylinder.

Certain aspects of the invention are illustrated by the following Examples. It is understood that these Examples are illustrative only and do not limit the scope of the invention recited in the appended claims. Unless specified otherwise, commercially available materials were used when performing these Examples.

### EXAMPLE 1

An explosively clad composite was formed in this Example by employing the assembly illustrated in Figure 4.

An approximately 38.10 mm (1-1/2 inch) thick SA516, Grade 70 steel plate, which measured about 558.80 mm (22 inches) by 524.00 mm (60 inches) was placed on a stainless steel plate with a thin layer of sand therebetween. The stainless steel plate was supported by a 25.4 mm (1 inch) steel plate separated therefrom by a layer of sand. Above this plate and spaced therefrom a distance of about 4.45 mm (0.175 inch) by 12 stainless steel tube standoffs, which were arranged in 3 lines and equally-spaced upon the SA516, Grade 70 steel plate, was placed in corresponding dimensional alignment an approximately 558.80 mm (22 inch) by 1524.00 mm (60 inch) by 6.35 mm (1/4 inch) thick Hastelloy C-276 plate. Above the Hastelloy plate and spaced therefrom a distance of about 4.45 mm (0.175 inch) by 12 stainless steel tube standoffs, which were arranged in 3 lines and equally-spaced upon the Hastelloy C-276 plate, was placed in corresponding dimensional alignment an approximately 558.80 mm (22 inch) by 1524.00 mm (60 inch) by 1.59 mm (1/16 inch) thick Mo41%Re alloy plate.

The outer layer of the molybdenum plate was covered with a layer of masking tape as a guard against marring the final surface by the explosive.

A dimensionally conforming layer of a powdered ANFO-based explosive, which contained an inert diluent, that had a weight of about 39.06 Kg/m² (8 pounds) per square foot, and a detonation velocity of about 2600 meters/sec was placed upon the molybdenum/rhenium alloy plate. A detonator was centered on the edge of the shortest dimension of the molybdenum plate and in contact with the explosive. The detonator was a commercially available electric detonator known as "E-1A #6". Initiation of the explosive was accomplished by using a primer held within a Lucite disk 50.80 mm (2 inches) in diameter. The primer was comprised of cast TNT wrapped with Datasheet "C", which is commercially available as "NP-2" from DuPont Company's Potomac River Works, Martinsburg, W.VA. The entire assembly containing the elements discussed above was beated to a temperature of 65.56°C (150°F) using a kerosene space heater. Because the temperature of the explosive remained below about 176.67C (350F) there was no danger of an unplanned detonation.

After the detonation of the explosive, the Mo41%Re, steel and Hastelloy C-276 plates were found to be firmly and uniformly bonded together to form a composite which had about 99% areal bonding. Ultrasonic testing was performed substantially in accordance with ASTM Method No. A578 for determining the percent bonding of the composite. Tests were performed on the composite substantially in accordance with ASTM Method No. A263.44T for determining the shear strength. The shear strength of the resultant composite was about 151.69 x 10⁶ P2 (22,000 psi).

### EXAMPLE 2

This Example demonstrates a process for providing a joint between two triclad metal composites that were formed substantially in accordance with the process described in Example 1. The composites comprise a base metal of carbon steel, an intermediate layer comprising Hastelloy C-276 (an alloy containing nickel, cobalt, chromium, and iron which was manufactured by Haynes International), and an interior surface layer comprising Mo41%Re alloy which was manufactured by Metallwerk Plansee GmbH, Austria.

The edges of these composites were prepared for welding by machining in order to provide two composites having the configuration illustrated by Figs. 1 or 2. The composites were then shaped by rolling and pressing in order to form components which are suitable for use in fabricating a pressure vessel.

Abutting edges of the formed composites were properly aligned with one another, and a portion of the carbon steel layers were welded together as shown in Figs. 1 and 2. The Hastelloy C-276 side of the joint was backgouged into the carbon steel weld. The Hastelloy was then welded completely by the gas tungsten arc welding process using matching chemistry filler metal. The carbon steel portion of the joint was completed by the submerged arc process. The resultant welded joint was radiographed in accordance with ASME code requirements. The Hastelloy side of the joint was examined by liquid penetrant methods. The results of these tests confirmed that an acceptable weld was obtained.

Two different methods were used for protecting the joint. The first method of joint protection was to locate a Mo41%Re alloy strip of the same thickness as the Mo41%Re layer of the joined composites. The strip was machined to fit snugly into the exposed joint gap, and so as to fill the exposed area. This strip was manually braze welded with 3.18 mm (1/8 inch) diameter 24 carat gold wire by the gas tungsten arc welding process which employed a shielding gas comprising 95% argon and 5% hydrogen. The seams between the strip and the Mo41%Re layer were sealed with gold as shown in Fig. 2.

The second method of joint protection which was used overlaying the Hastelloy material in the manner illustrated in Fig. 1, with 24 carat gold using manual or automatic gas tungsten arc welding. Each pass along the joint, which occurred during the overlay process, was layered consecutively across the exposed joint. The final passes of the overlay deposited gold between the Hastelloy C-276 and Mo41%Re alloy, and upon the Mo41%Re layer of the composite.

### EXAMPLE 3

This Example demonstrates the tensile strength of a protected joint which can be formed between two composites in accordance with the invention.

Two (2) test samples, "A" and "B", were taken from a 10,968 sq.mm (17 square inch) composite, which comprised an approximately 38.10 mm (1.5 inch) thick SA 516-70 carbon steel base layer, a 6.35 mm (1/4 inch) thick intermediate layer of Hastelloy C-276, and a layer of 1.59 mm (1/16 inch) thick Mo41%Re alloy, that had been formed substantially in accordance with Example 1. The test samples, which measured about 431.80 mm (17 inches) x 63.50 mm (2-1/2 inches), were out in half and welded back together, substantially in accordance with the procedures described in Example 2 and shown in Figure 1.

The joints formed in Samples A and B were protected by the following methods.

Sample A - The welded joint was covered with a Mo41%Re strip which was then braze welded along the edges with a 24 carat gold as shown in Figure 1.

Sample B - The Mo41%Re joint was overlaid completely with 24 carat gold as shown in Figure 2.

One tensile test sample was taken from each of Samples A and B. The tensile test samples measured about 50.80 mm (2 inches) wide by about 45.72 mm (1.8 inches) thick. The test force-deflection diagrams resulting from the tensile tests are summarized as follows:

| | Sample A | Sample B |
|---|---|---|
| Force at yield | 1.41x10⁶ newton (N) (316 kips) | 1.25x10⁶ N (282 kips) |
| Max. tensile force | 1.44x10⁶ N (324 kips) | 1.43x10⁶ N (322 kips) |
| Max. tensile stress | 622.62x10⁶ P2 (90.3 ksi) | 616.41x10⁶ P2 (89.4 ksi) |

The protected welds in both Test Samples remained intact in the elastic range which indicates that the welds are sufficiently stress resistant to satisfy the ASME code.

### EXAMPLE 4

This Example demonstrates that gold is compatible with a composite which contains a layer comprising Hastelloy C-276.

Two samples, "C" and "D" were fabricated substantially in accordance with Example 1, and joined together substantially in accordance with Example 3. The resultant joined composites comprised 24 carat gold overlay on an approximately 6.35 mm (1/4 inch) thick Hastelloy C-276 on 38.10 mm (1-1/2 inch) thick SA-516, Grade 70 carbon steel.

The gold was applied manually in Sample 3 by brazing, whereas in Sample D the gold was applied using automatic welding equipment. Two test coupons which measured about 50.80 mm (2 inches) x 304.80 mm (12 inches) were taken from each of Samples C and D. One test coupon from each of Samples C and D was fatigue tested at room temperature at stresses which ranged from about 16.55x10⁶ P2 (2,400 psi) to about 165.48x10⁶ P2 (24,000 psi). The remaining two test coupons were fatigue tested at a temperature of about 204.44°C (400°F), while cycling between 13.79x10⁶ P2 (2,000 psi) and 137.90x10⁶ P2 (20,000 psi) for more than 10,000 cycles. All of the fatigue samples survived 10,000 cycles in these tests, and were sectioned for metallurgical examination. Metallurgical examination revealed that there was substantially no crack propagation within the Hastelloy C-276 layer.

### EXAMPLE 5

This Example demonstrates that joined composites of the invention can withstand high-pressure thermal cycling.

A joint was prepared substantially in accordance with Example 3, which was protected by 24 carat gold overlay, and used for simulating operation of a pressure vessel. The joint was located between two composites, which were formed substantially in accordance with Example 1, that comprised 1.59 mm (1/16 inch) thick Mo41%Re, 6.35 mm (1/4 inch) thick Hastelloy C-276, and 38.10 mm (1-1/2 inch) thick SA-516, Grade 70 carbon steel. In order to simulate the cyclic operation of a pressure vessel for manufacturing a HFC, three samples A1, A2 and A3, were taken from the joint and exposed to the following environment:
1. Heating at a rate of about 259.26Kelvin/minute (7F/minute) to a temperature of about 204.44°C (400°F),
2. Applying a stress load across the heated joint which was equivalent to 4.14x10⁶ P2 (600 psig) within an approximately 2.74 meters (9 ft.) diameter vessel,
3. Relieve the stress load at a rate of about 0.69x10⁶ P2 (0.1 ksi),
4. Cool to about 100°C or below,
5. Repeating steps 1-4, a total of 510 cycles for sample A1, 1,016 cycles for sample A2, and 600 cycles for sample A3.
The samples were examined visually and microscopically, and it was determined that the joint had successfully withstood the thermal and mechanical stress cycling that would be experienced in service as pressure vessel.

While certain desirable aspects of the invention have been described above in detail, a person in this art will recognize that a variety of variations and embodiments are encompassed by the appended claims.

## Claims

1. A process for forming a joint comprising:
providing at least one composite, which comprises a molybdenum alloy explosively bonded to a base metal,
removing a portion of the molybdenum/rhenium alloy which is adjacent to abutting edges of the base metal,
welding the abutting edges together, and
protecting the weld from corrosion comprising brazing with gold or gold alloys.

2. The process of claim 1 wherein said providing further comprises shaping one composite such that opposing ends of the same composite become the abutting edges.

3. The process of claim 1 further comprising welding together at least two composites.

4. The process of claim 1 wherein said base metal comprises a material selected from the group consisting of carbon steel, stainless steel and aluminium.

5. The process of claim 1 wherein said composite further comprises an intermediate layer between said molybdenum alloy and base metal.

6. The process of claim 5 wherein said intermediate layer comprises a material selected from the group consisting of copper, nickel and alloys thereof.

7. The process of claim 1 wherein said protecting further comprises placing a molybdenum alloy strip upon the weld, and said brazing comprising brazing the edges of the strip.

8. The process of claim 1 wherein said protecting further comprises placing a filler strip upon the weld, placing a strip of corrosion resistant metal upon said filler strip, and, said brazing comprising brazing the edges of the strip.

9. The process of claim 1 wherein said molybdenum/rhenium alloy comprises 59% by weight molybdenum and 41% by weight rhenium.

10. A process for assembling a vessel for manufacturing a fluorinated alkane therein comprising:
shaping at least one composite, which comprises a molybdenum alloy and base metal layers into a predetermined configuration,
joining said at least one composite to form an assembly,
joining at least two assemblies together by the process of claim 1, thereby obtaining said vessel, and
protecting the joints within said vessel from corrosion.

11. A corrosion and stress resistant joint between at least one composite which comprises an unrecrystallized molybdenum-rhenium alloy and base metal layers, said joint comprising:
a weld between at least the base metal layers, and, at least one means for protecting the joint comprising a brazed overlay containing gold or at least one corrosion resistant strip which covers the weld and is brazed at the edges with gold or a gold alloy.

12. A reaction vessel for use in manufacturing a fluorinated alkane comprising:
at least two composites, wherein at least a portion of said composites comprises a molybdenum alloy,
said at least two composites have a joint therebetween wherein the joint comprises a joint as claimed in claim 11.

13. The joint as claimed in claim 11 which has a tensile strength of at least about 613.63x10⁶ Pa (89 ksi).

## Patentansprüche

1. Verfahren zur Herstellung einer Verbindung, umfassend:
Bereitstellen von mindestens einem Verbundmaterial, bestehend aus einer durch Explosion an ein Basismetall gebundenem Molybdänlegierung,
Beseitigen eines Bereiches der Molybdän-Rhenium-Legierung, der sich im Bereich der aneinanderstoßenden Ränder des Basismetalls befindet,
Verschweißen der aneinanderstoßenden Kanten mteinander, und
Schützen der Schweißverbindung vor Korrosion durch Hartverlöten mit Gold oder Goldlegierungen.

2. Verfahren nach Anspruch 1, worin das Bereitstellen des weiteren das Formen eines Verbundmaterials in einer Weise umfaßt, daß die einander entgegengesetzten Enden des gleichen Verbundmaterials zu aneinanderstoßenden Rändern werden.

3. Verfahren nach Anspruch 1, des weiteren umfassend das Verschweißen von mindestens zwei Verbundmaterialien miteinander.

4. Verfahren nach Anspruch 1, worin das Basismetall aus einem Material besteht, das ausgewählt ist aus der Gruppe umfassend Kohlenstoffstahl, rostfreien Stahl und Aluminium.

5. Verfahren nach Anspruch 1, worin der Verbundstoff des weiteren eine Zwischenschicht zwischen der Molybdän-Legierung und dem Basismetall aufweist.

6. Verfahren nach Anspruch 5, worin die Zwischenschicht aus einem Material besteht, das ausgewählt ist aus der Gruppe umfassend Kupfer, Nickel und Legierungen derselben.

7. Verfahren nach Anspruch 1, worin das Schützen des weiteren das Aufbringen eines Streifens aus einer Molybdänlegierung auf die Schweißverbindung umfaßt und das Hartverlöten das Hartverlöten der Ränder des Streifens umfaßt.

8. Verfahren nach Anspruch 1, worin das Schützen des weiteren das Aufbringen eines Füllstoffstreifens auf die Schweißverbindung und das Aufbringen eines Streifens aus korrosionsbeständigem Metall auf den Füllstoffstreifen umfaßt und das Hartverlöten das Hartverlöten der Ränder des Streifens umfaßt.

9. Verfahren nach Anspruch 1, worin die Molybdän-Rhenium-Legierung aus 59 Gew.-% Molybdän und 41 Gew.-% Rhenium besteht.

10. Verfahren zum zusammenfügen eines Behälters zur Herstellung eines Fluoralkans darin, umfassend:
Ausformen von mindestens einem Verbundmaterial, bestehend aus einer Molybdänlegierung und aus Basismetallschichten, zu einer vorbestimmten Struktur,
Verbinden von mindestens einem Verbundmaterial zur Ausbildung einer Baugruppe,
Verbinden von mindestens zwei Baugruppen miteinander mit dem Verfahren von Anspruch 1, wodurch das Gefäß entsteht, und
Schützen der Verbindungen in dem Gefäß vor Korrosion.

11. Korrosions- und spannungsbeständige Verbindung zwischen mindestens einem Verbundmaterial, das aus einer nicht rekristallisierten Molybdän-Rhenium-Legierung und aus Basismetallschichten besteht, wobei die Verbindung umfaßt:
eine Schweißverbindung zumindest zwischen den Grundmetallschichten und mindestens eine Einrichtung zum Schützen der Verbindung, bestehend aus einem hartgelöteten, goldhaltigen Belag oder aus mindestens einem korrosionsbeständigen Streifen, der die Schweißverbindung überdeckt und an den Rändern mit Gold oder einer Goldlegierung hartverlötet ist.

12. Reaktionsgefäß zur Verwendung bei der Herstellung eines Fluoralkans, umfassend:
mindestens zwei Verbundmaterialien, worin mindestens ein Abschnitt der Verbundmaterialien aus einer Molybdänlegierung besteht,
wobei die mindestens zwei Verbundmaterialien eine Verbindung zwischen sich aufweisen, worin die Verbindung aus einer Verbindung nach Anspruch 11 besteht.

13. Verbindung nach Anspruch 11, die eine Zugfestigkeit von mindestens etwa 613,63 x 10⁶ Pa (89 ksi) besitzt.

## Revendications

1. Un procédé pour former un joint comprenant :
la préparation d'au moins un composite, qui comprend un alliage de molybdène lié par explosion à un métal de base,
l'enlèvement d'une portion de l'alliage molybdène/rhénium qui est adjacente aux bords aboutés du métal de base,
le soudage entre eux des bords aboutés, et
la protection de la soudure contre la corrosion par brasage avec de l'or ou des alliages d'or.

2. Le procédé de la revendication 1, dans lequel ladite préparation comprend de plus la mise en forme d'un seul composite de telle sorte que les extrémités opposées du même composite deviennent les bords aboutés.

3. Le procédé de la revendication 1, comprenant de plus le soudage d'au moins deux composites entre eux.

4. Le procédé de la revendication 1, dans lequel ledit métal de base comprend un matériau choisi dans le groupe formé par l'acier au carbone, l'acier inoxydable et l'aluminium.

5. Le procédé de la revendication 1, dans lequel ledit composite comprend de plus une couche intermédiaire entre ledit alliage de molybdène et le métal de base.

6. Le procédé de la revendication 5, dans lequel ladite couche intermédiaire comprend un matériau choisi dans le groupe formé par le cuivre, le nickel et leurs alliages.

7. Le procédé de la revendication 1, dans lequel ladite protection comprend de plus la mise en place d'une bande d'alliage de molybdène sur la soudure, et ledit brasage comprend le brasage des bords de la bande.

8. Le procédé de la revendication 1, dans lequel ladite protection comprend de plus la mise en place d'une bande de remplissage sur la soudure, la mise en place d'une bande de métal résistant à la corrosion sur ladite bande de remplissage, et ledit brasage comprend le brasage des bords de la bande.

9. Le procédé de la revendication 1, dans lequel ledit alliage molybdène/rhénium comprend 59 % en poids de molybdène et 41 % en poids de rhénium.

10. Un procédé pour assembler un récipient destiné à la fabrication d'un alcane fluoré, consistant à :
mettre en forme au moins un composite, qui comprend des couches d'alliage de molybdène et de métal base en une configuration prédéterminée,
joindre ledit ou lesdits composites pour former un assemblage,
joindre au moins deux assemblages ensemble par le procédé de la revendication 1, pour obtenir ainsi ledit récipient, et
protéger les joints intérieurs dudit récipient contre la corrosion.

11. Un joint résistant à la corrosion et à la contrainte entre au moins un composite qui comprend des couches d'alliage molybdène-rhénium non recristallisé et de métal de base, ledit joint comprenant :
une soudure entre au moins les couches de métal de base, et au moins un moyen pour protéger le joint comprenant un dépôt de recouvrement brasé contenant de l'or ou au moins une bande résistante à la corrosion qui couvre la soudure et est brasée au niveau des bords avec de l'or ou un alliage d'or.

12. Un récipient de réaction à utiliser dans la fabrication d'un alcane fluoré, comprenant :
au moins deux composites, au moins une portion desdits composites comprenant un alliage de molybdène,
ces deux ou plusieurs composites ont un joint entre eux, le joint comprenant un joint tel que revendiqué dans la revendication 11.

13. Le joint tel que revendiqué dans la revendication 11, qui a une résistance à la traction d'au moins environ 613,63 × 10⁶ Pa.
